# EUROPEAN PATENT APPLICATION

(11) **EP 4 368 540 A1**
(43) Date of publication of application: **15.05.2024**
(21) Application number: 22837066.4
(22) Date of filing: 08.07.2022
(51) Int. Cl.: B65G 1/10, B65G 1/04

(54) **BOX PICKING APPARATUS AND ROBOT**

(30) Priority: 09.07.2021 CN 202121566645 U; 31.08.2021 CN 202122079403 U; 09.09.2021 CN 202122181459 U; 09.09.2021 CN 202111058253; 26.10.2021 CN 202122584103 U; 16.03.2022 CN 202220578679 U
(71) Applicant: Beijing Geekplus Technology Co., Ltd., Chaoyang District Beijing 100102 (CN)
(72) Inventor: LI, Xiaowei, Beijing 100102 (CN); WANG, Qiming, Beijing 100102 (CN); QIN, Zhihui, Beijing 100102 (CN); WANG, Pengfei, Beijing 100102 (CN); YUAN, Li, Beijing 100102 (CN); WANG, Haichao, Beijing 100102 (CN)
(74) Representative: Manna, Sara
(86) International application number: PCT/CN2022/104749
(87) International publication number: WO 2023/280321

(57) **Abstract**

Embodiments of the present application disclose a box picking apparatus and a robot. The box picking apparatus comprises a push plate assembly and a hooking assembly. The push plate assembly can move along a front-to-back direction. The hooking assembly is disposed on the push plate assembly and has a claw, and the hooking assembly can rotate forward and backward relative to the push plate assembly. The box picking apparatus has a first position and a second position. In the first position, a front end of the claw extends forward out of the push plate assembly, and in the second position, the hooking assembly rotates backward by a first predetermined angle relative to the push plate assembly, the push plate assembly being adapted to contact a product box, and the claw being adapted to fit with the product box. The box picking apparatus of the embodiments of the present application has high box picking precision and can reduce a minimum spacing between adjacent product boxes, thereby improving storage density and a warehouse utilization rate.

## Description

### CROSS-REFERENCE TO RELATED APPLICATIONS

This application claims priority to and benefits of Chinese Patent Application No. 202121566645.3 filed on July 9, 2021, Chinese Patent Application No. 202122079403.8 filed on August 31, 2021, Chinese Patent Application No. 202122181459.4 filed on September 9, 2021, Chinese Patent Application No. 202111058253.0 filed on September 9, 2021, Chinese Patent Application No. 202122584103.5 filed on October 26, 2021, and Chinese Patent Application No. 202220578679.2 filed on March 16, 2022, which are incorporated herein by reference in their entireties.

### TECHNICAL FIELD

This application relates to the field of warehousing, and specifically, to a box retrieval device and a robot.

### BACKGROUND

With the continuous development and progress of the automated warehousing technology, warehouse storage density is also constantly increasing. In the related art, during warehouse storage, a cargo box is stored or picked up by using a box retrieval mechanism such as a suction cup-type, lift-type, or fork-type box retrieval mechanism, so that a minimum distance between cargo boxes may be reduced to 40 mm.

However, the box retrieval mechanism in the related art is limited by the transmission principle, the hardware complexity, the sensor accuracy, and the like of the mechanism. It is difficult to continue to reduce the minimum distance of the cargo box, the density of the warehouse cannot be further increased, and the utilization of the warehouse cannot be improved. In addition, there are also problems such as a complex structure, a large volume, high noise, a short service life, an easy box retrieval failure, and low box retrieval efficiency.

### SUMMARY

This application aims to resolve at least one of the technical problems in the related art to some extent. Therefore, an embodiment of this application provides a box retrieval device. The box retrieval device has high box retrieval precision, and can reduce a minimum distance between adjacent cargo boxes, thereby increasing warehousing density and warehouse utilization.

The box retrieval device according to an embodiment of this application includes: a mounting frame, where an accommodating space is formed on the mounting frame; and a box retrieval assembly, where the box retrieval assembly is movably arranged on the mounting base along a front-rear direction, and the box retrieval assembly is at least partially dockable to one end of the cargo box adjacent to the box retrieval assembly in the front-rear direction, to enable the box retrieval assembly to pull or push the cargo box into or out of the accommodating space while the box retrieval assembly moves along the front-rear direction.

Beneficial effects of this disclosure are: This disclosure provides a box retrieval device. A box retrieval member is arranged, and the box retrieval member is enabled to dock to one end of a cargo box, so that when picking up and placing the cargo box, the box retrieval device may only act on an end of the cargo box facing toward a transporter robot. Therefore, the box retrieval member may clamp the cargo box without extending into a gap between two cargo boxes, or the box retrieval member may only extend to a side portion at a front end of the cargo box to dock to the cargo box and pick up and place the cargo box, to reduce or avoid interference of the box retrieval member on a neighboring cargo box of a target cargo box, thereby reducing a gap required between two adjacent cargo boxes on an inventory receptacle and increasing arrangement density of cargo boxes on the inventory receptacle. In addition, no or less other cargo boxes on the inventory receptacle are pushed or collided with, which helps maintain stability of the cargo box on the inventory receptacle and facilitates subsequent a pick-and-place operation on the cargo box.

A robot according to an embodiment of this application includes: a chassis; a gantry, where the gantry is arranged on the chassis; a lifting assembly, where the lifting assembly is configured to move in the up-down direction along the gantry; and a box retrieval device, where the lifting assembly is connected to the box retrieval device to drive the box retrieval device to move in the up-down direction relative to the gantry, and the box retrieval device is the box retrieval device according to any one of the foregoing embodiments.

### BRIEF DESCRIPTION OF THE DRAWINGS

FIG. 1 is a schematic structural diagram of a transporter robot and a cargo box according to Embodiment 1 of this disclosure;
FIG. 2 is a schematic exploded structural diagram of a transporter robot according to Embodiment 1 of this disclosure;
FIG. 3 is a partially enlarged view of a position I in FIG. 2;
FIG. 4 is a schematic partial structural diagram of a transporter robot according to Embodiment 1 of this disclosure;
FIG. 5 is a schematic structural diagram of a back surface of a lifting mechanism according to Embodiment 1 of this disclosure;
FIG. 6 is a schematic structural diagram of a lifting mechanism, a box retrieval device, and a cargo box according to Embodiment 1 of this disclosure;
FIG. 7 is a schematic exploded structural diagram of a lifting mechanism and a box retrieval device according to Embodiment 1 of this disclosure;
FIG. 8 is a schematic structural diagram of a box retrieval device according to Embodiment 1 of this disclosure;
FIG. 9 is a schematic structural diagram of a box retrieval device and a rotary mechanism according to Embodiment 1 of this disclosure;
FIG. 10 is a schematic diagram of a state of a box retrieval device when transferring a cargo box according to Embodiment 5 of this disclosure;
FIG. 11 is a cross-sectional view of FIG. 10;
FIG. 12 is a schematic structural diagram of a box retrieval device according to Embodiment 5 of this disclosure, where a support assembly is removed;
FIG. 13 is a schematic left view of FIG. 12;
FIG. 14 is a state diagram of a box retrieval device in contact with a cargo box according to Embodiment 5 of this disclosure, where no support assembly is shown;
FIG. 15 is a schematic cross-sectional view of a push plate assembly according to Embodiment 5 of this disclosure; FIG. 16 is a schematic enlarged view of a position A in FIG. 15;
FIG. 17 is a schematic diagram of a state of a push plate assembly when a box retrieval device moves to a second position according to Embodiment 5 of this disclosure;
FIG. 18 is a schematic three-dimensional structural diagram of specific Embodiment 6 of a cargo transporter robot in a use state according to this disclosure;
FIG. 19 is a partially enlarged view of a position A in FIG. 18;
FIG. 20 is a schematic front structural diagram of an auxiliary support device in a structure shown in FIG. 19 being in an extended state;
FIG. 21 is a partially enlarged view of a position B in a figure.
FIG. 22 is a schematic front structural diagram of an auxiliary support device in a structure shown in FIG. 21 being in a retracted state;
FIG. 23 is a partially enlarged view of a position C in FIG. 22;
FIG. 24 is a schematic three-dimensional structural diagram of an auxiliary support device shown in FIG. 23;
FIG. 25 is a schematic front structural diagram of the auxiliary support device shown in FIG. 24;
FIG. 26 is a schematic structural diagram of a robot according to Embodiment 9 of this disclosure;
FIG. 27 is a schematic structural diagram 1 of a telescopic fork device according to Embodiment 9 of this disclosure;
FIG. 28 is a schematic structural diagram 2 of a telescopic fork device according to Embodiment 9 of this disclosure; and
FIG. 29 is a schematic diagram of a state of a telescopic fork device that is not in place according to Embodiment 9 of this disclosure.

### Reference signs:

100. transporter robot; 20. cargo box; 201. box body; 202. adapter; 2021. first connecting portion; 2022. first plate inserting portion; 203. associating portion; 2031. second connecting portion; 2032. second plate inserting portion; 204. vertical rib; 1. box retrieval device; 11. box retrieval drive assembly; 111. box retrieval motor; 112. box retrieval transmission assembly; 1121. driving pulley; 1122. driven pulley; 1123. transmission belt; 1124. rack; 1125. driving gear; 1126. intermediate gear; 113. synchronizing transmission assembly; 1131. transmission shaft; 1132. intermediate transmission assembly; 114. rotating shaft seat; 115. wheel mounting member; 116. motor seat; 1151. wheel axle portion; 12. mounting frame; 121. mounting base plate; 1211. positioning ring; 122. mounting side plate; 1221. insertion hole; 1222. fastening hole; 13. box retrieval assembly; 131. box retrieval member; 1311. connecting plate portion; 1312. hook plate portion; 132. connecting member; 133. belt fastening member; 134. arm plate; 1341. hook member; 14. detection member; 15. friction strip; 16. drive frame; 17. hooking assembly; 171. claw; 172. bracket; 173. first signal plate; 174. first sensor; 175. first return member; 18. push plate assembly; 181. base; 182. push plate; 183. guide member; 1831. annular protrusion; 184. elastic member; 185. second signal plate; 186. second sensor; 187. seat; 188. rotating shaft; 19. support assembly; 191. support seat; 1911. guiding groove; 192. support component; 1921. guiding member; 1922. pulley; 2. temporary storage partition; 3. chassis; 31. driving wheel; 4. gantry; 5. auxiliary support device; 50. fixed base; 51. support element; 52. first connecting rod; 53. second connecting rod; 54. first lower articulated shaft; 55. first upper articulated shaft; 56. second lower articulated shaft; 57. second upper articulated shaft; 58. drive assembly; 6. lifting assembly; 61. lifting frame; 611. lifting horizontal frame; 6111. main lifting plate; 6112. enclosure plate; 6113. limiting groove; 6114. positioning convex ring; 612. lifting vertical frame; 62. lifting transmission assembly; 621. driving gear; 622. rack; 63. lifting drive member; 64. synchronizing shaft; 65. shaft transmission assembly; 66. guide assembly; 7. rotary mechanism; 71. slewing bearing; 711. pulley ring gear; 72. rotating pulley; 73. rotation driving motor; 74. rotation transmission belt; 75. limiting column; 81. fork arm unit; 811. arm plate; 812. hook member; 813. claw seat; 8131. positioning hole; 8132. notch; 814. sliding plate portion; 815. limiting plate; 82. adjustment assembly; 821. adjustment drive motor; 822. lead screw; 823. nut seat; 8231. cylinder portion; 8232. fixed plate portion; 83. fixing frame; 831. support seat; 832. connecting bracket; 8321. horizontal support plate portion; 8322. vertical support plate portion; 8323. seat portion; 8324. extension seat portion; 84. adjustment guide assembly; 841. Y-direction guide rail; 842. Y-direction slider; 85. belt fastening member; 10. connecting frame; 101. seat; 102. connecting column; 103. reinforcing seat; 30. telescopic fork device; 301. multi-stage telescopic mechanism; 302. front shifting finger; 303A. rear shifting finger; 303B. rear shifting finger; 304. in-place detection device; 305. movable pallet; 40. rack.

### DETAILED DESCRIPTION

The following describes embodiments of this disclosure in detail. Examples of the embodiments are shown in the accompanying drawings. The following embodiments described with reference to the accompanying drawings are exemplary, and are intended to describe this disclosure and cannot be construed as a limitation to this disclosure.

A box retrieval device and a robot according to embodiments of this disclosure are described with reference to the accompanying drawings.

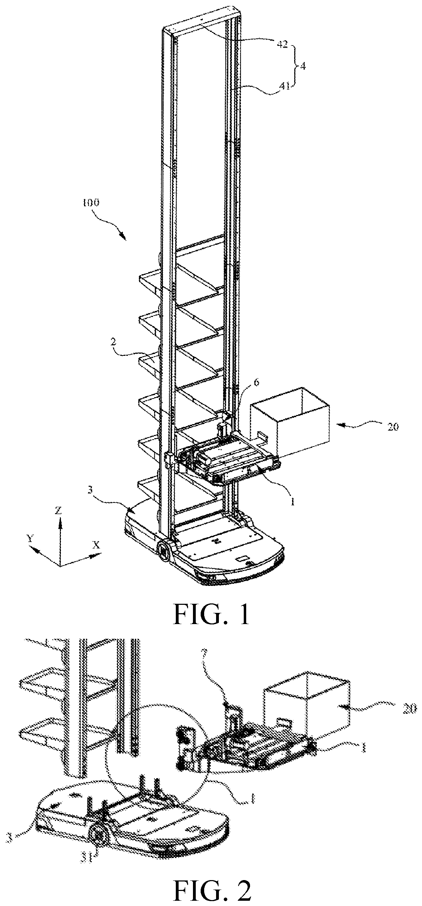

Embodiment 1: As shown in FIG. 1, this embodiment provides a transporter robot 100, configured to transport and pick up and place a cargo box 20. The transporter robot 100 is mainly used in the warehousing and logistics industry, to pick up and place and transport the cargo box 20 storing ordered cargo or a parcel, thereby implementing an order-based box retrieval or loading operation. The transporter robot 100 may also be used in another site in which the cargo box 20 or the cargo needs to be transported. In this embodiment, applications of the transporter robot 100 are merely illustrative, and are not specifically limited in this embodiment.

As shown in FIG. 1, the transporter robot 100 provided in this embodiment includes a chassis 3, a gantry 4, a box retrieval assembly, a lifting assembly 6, a detection assembly, and a controller. The chassis 3 is configured to implement movement of the transporter robot 100 on the ground, to enable the transporter robot 100 to transport the cargo box 20. The gantry 4 is arranged on the chassis 3 and configured to fix and support the box retrieval assembly. The box retrieval assembly is arranged in a liftable manner on the gantry 4 through the lifting assembly 6, to pick up the cargo box 20 on the inventory receptacle or place the cargo box 20 onto the inventory receptacle. The detection assembly is configured to detect a working state of the transporter robot 100 and an external environment status. The controller is configured to obtain order information of warehousing and logistics, and intelligently regulate operation of the transporter robot 100 based on the order information and a detection result of the detection assembly.

For the convenience of subsequent description, a coordinate system of the transporter robot 100 is established in directions shown in FIG. 1 and FIG. 2, where an X direction is a length direction of the gantry 4 of a driving wheel 31, a Y direction is a width direction of the gantry 4, and a Z direction is a height direction of the gantry 4.

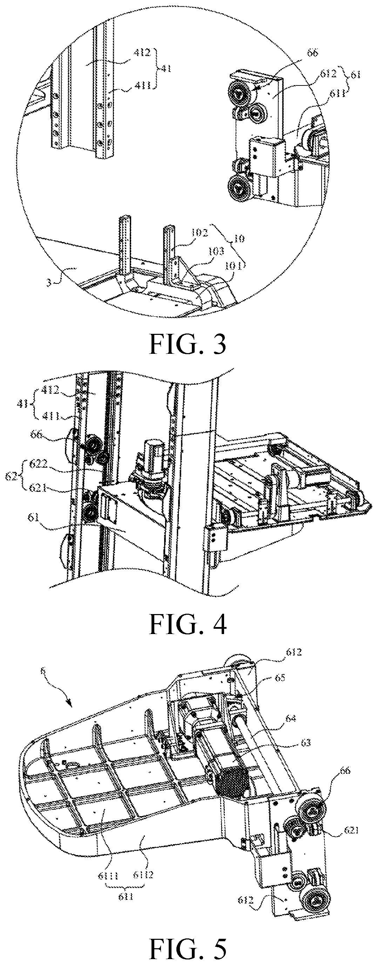

As shown in FIG. 2 and FIG. 3, the gantry 4 includes two support columns 41 arranged opposite to each other and spaced apart along the X direction. Each support column 41 is arranged vertically. A lower end of the support column 41 is connected to the chassis 3. A support rod portion 411 is a hollow rod-shaped structure. Cavities of two support rod portions 411 that are docked to each other in the up-down direction are in communication. The gantry 4 further includes a connecting rod (not shown). An upper end of the connecting rod is inserted into the support rod portion 411 located at an upper part, and a lower end thereof is inserted into the support rod portion 411 located at a lower part. In addition, the connecting rod is connected to both the support rod portions 411 by screw members. The support rod portions 411 are set to hollow rod-shaped structures, so that the convenience of connecting two support sections can be improved while an overall weight of the gantry 4 can also be reduced.

For the convenience of connecting the chassis 3 and the support column 41. A connecting frame 10 is arranged at a top portion of the chassis 3. The connecting frame 10 and the support column 41 are arranged in one-to-one correspondence. The connecting frame 10 includes a seat 101 and a connecting column 102 arranged on the seat 101 vertically in a protruding manner. The seat 101 is detachably connected to an upper end face of the chassis 3. Two connecting columns 102 and the two support rod portions 411 of the support column 41 are arranged in one-to-one correspondence. The connecting column 102 is inserted into the corresponding support rod portion 411 and connected to the support rod portion 411 by a screw member. A lower end of the support column 41 abuts against an upper surface of the seat 101. Preferably, a reinforcing seat 103 is connected between the seat 101 and an outer sidewall of the support rod portion 411, to enhance connection strength between the support column 41 and the connecting frame 10.

As shown in FIG. 4 to FIG. 6, the lifting assembly 6 includes a lifting frame 61, a lifting drive member 63, and a lifting transmission assembly 62. The lifting drive member 63 is transmission-connected to the lifting transmission assembly 62. The lifting frame 61 is connected to the lifting transmission assembly 62. The box retrieval assembly is mounted on the lifting frame 61. The lifting drive member 63 is mounted on the lifting frame 61. The lifting transmission assembly 62 includes a rack 622 laid on the support column 41 and a driving gear 621 meshed with the rack 622. The driving gear 621 is transmission-connected to the lifting drive member 63. A shaft transmission assembly 65 includes two pulleys respectively sleeved over an output shaft of a lifting motor and a synchronizing shaft 64 and a belt wound between the two pulleys.

Further, the lifting frame 61 includes a lifting horizontal frame 611 and a lifting vertical frame 612. The lifting horizontal frame 611 is arranged horizontally and configured for mounting the box retrieval assembly. The lifting vertical frame 612 is arranged vertically and is in one-to-one correspondence with the lifting transmission assembly 62. A guide assembly 66 is arranged on each lifting vertical frame 612. The guide assembly 66 is configured to implement a slidable connection between the lifting vertical frame 612 and the support column 41 and guidance of movement in a vertical direction.

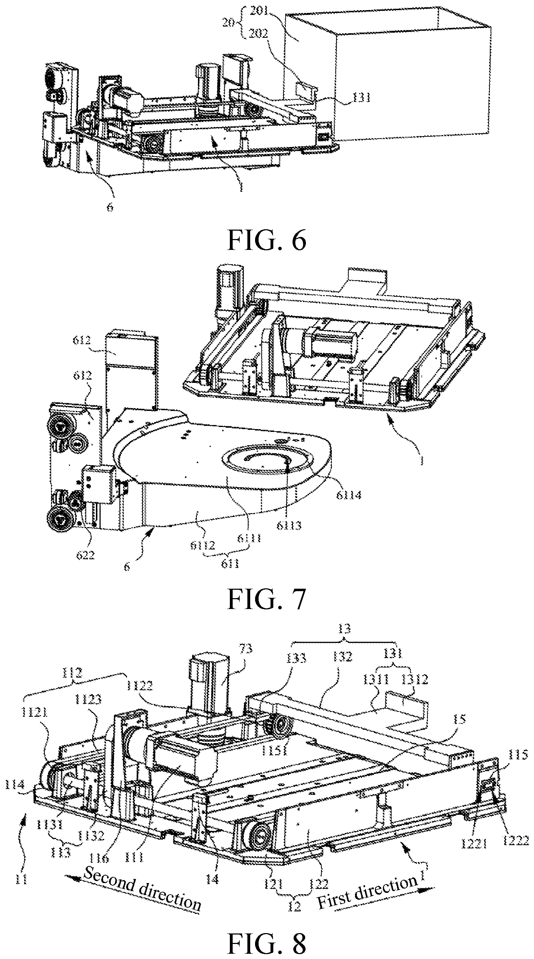

The lifting horizontal frame 611 includes a main lifting plate 6111 and an enclosure plate 6112 downwardly enclosing a peripheral side of the main lifting plate 6111. The enclosure plate 6112 and the main lifting plate 6111 form an accommodating groove in an enclosing manner. Two lifting vertical frames 612 are located respectively on two opposite sides of the enclosure plate 6112. The lifting drive member 63, a part of the synchronizing shaft 64, and the shaft transmission assembly 65 are all located in the accommodating groove. Two ends of the synchronizing shaft 64 pass through the enclosure plate 6112 and a corresponding lifting vertical frame 612 and extend from an outer side of the lifting frame 61. The driving gear 621 and the guide assembly 66 are located on a side of the lifting vertical frame 612 away from the enclosure plate 6112. As shown in FIG. 6 to FIG. 8, the box retrieval assembly includes a mounting frame 12, a box retrieval drive assembly 11 arranged on one side of the mounting frame 12, and a box retrieval assembly configured to pick up the cargo box 20. The mounting frame 12 is mounted on the lifting frame 61 on the lifting horizontal frame 611, and an accommodating space is formed on the mounting frame 12. The box retrieval assembly includes a box retrieval member 131. The box retrieval member 131 can be detachably connected to one end of the cargo box 20. The box retrieval drive assembly 11 is mounted on the mounting frame 12. The box retrieval drive assembly 11 drives the box retrieval assembly to move along a first direction of the box retrieval assembly to pull or push the cargo box 20 into or out of the accommodating space, to transfer the cargo box 20 between the transporter robot 100 and the inventory receptacle.

This disclosure provides the box retrieval assembly and the transporter robot 100. The box retrieval member 131 is arranged, and the box retrieval member 131 is enabled to clamp the cargo box 20 without extending into a gap between two cargo boxes 20, or the box retrieval member 131 may be enabled to only extend to a side portion at a front end of the cargo box to dock to the cargo box 20 and pick up and place the cargo box 20, to reduce or avoid interference of the box retrieval member 131 on a neighboring cargo box 20 of a target cargo box 20, thereby reducing a gap required between two adjacent cargo boxes 20 on an inventory receptacle and increasing arrangement density of cargo boxes 20 on the inventory receptacle. In addition, no or less other cargo boxes 20 on the inventory receptacle are pushed or collided with, which helps maintain stability of the cargo box on the inventory receptacle. It should be noted that the foregoing one end refers to a front side surface at one end of the cargo box 20 and parts of other side surfaces of the cargo box 20 close to the front side surface. When the cargo box 20 is placed on the inventory receptacle, the one end of the cargo box 20 refers to an end of the cargo box 20 facing toward the transporter robot 100.

In this embodiment, the first direction may be parallel to the X direction. That is, a direction in which the cargo box is picked up and placed is the same as an operation direction of the transporter robot. The first direction may alternatively be perpendicular to the X direction. That is, the direction in which the cargo box is picked up and placed is perpendicular to the operation direction of the transporter robot. Preferably, the box retrieval drive assembly 11 includes a box retrieval motor 111 and two box retrieval transmission assemblies 112 that are arranged opposite to each other and spaced apart along a second direction of the box retrieval assembly. The box retrieval motor 111 is configured to drive the box retrieval transmission assembly 112 to act. The box retrieval assembly is connected between the two box retrieval transmission assemblies. 112. In addition, synchronizing actions of the two drive transmission assemblies drive the box retrieval assembly to move. The foregoing accommodating space is formed between the two box retrieval transmission assemblies 112. The motion smoothness and reliability of the box retrieval assembly can be improved by arranging the two box retrieval transmission assemblies 112.

In another embodiment, only one box retrieval transmission assembly 112 may be arranged. A slide guide assembly is further arranged on the box retrieval assembly. The slide guide assembly and the box retrieval transmission assembly 112 are arranged opposite to each other and spaced apart. An accommodating space is formed between the slide guide assembly and the box retrieval transmission assembly 112. Two ends of the box retrieval assembly are respectively connected to the slide guide assembly and the box retrieval transmission assembly 112. That is, the slide guide assembly assists movement of the box retrieval assembly and prevents the box retrieval assembly from shifting during moving.

Only one box retrieval motor 111 is arranged, and the box retrieval motor 111 is connected to the two box retrieval transmission assemblies 112 by a synchronizing transmission assembly 113, thereby reducing costs while ensuring synchronization of the two box retrieval transmission assemblies 112. In this embodiment, the box retrieval transmission assembly 112 includes a driving pulley 1121 and a driven pulley 1122 arranged opposite to each other and spaced apart along the first direction, and a transmission belt 1123 wound around the driving pulley 1121 and the driven pulley 1122. The synchronizing transmission assembly 113 includes a transmission shaft 1131 extending in the second direction and an intermediate transmission assembly 1132 connected between the box retrieval motor 111 and the transmission shaft 1131. Two driving pulleys 1121 are respectively fixedly sleeved over two ends of the transmission shaft 1131. The transmission shaft 1131 is arranged parallel to and spaced apart from an output shaft of the box retrieval motor 111. The intermediate transmission assembly 1132 includes two intermediate pulleys respectively sleeved over in the box retrieval motor 111 and the transmission shaft 1131 and an intermediate transmission belt wound around the two intermediate pulleys.

Preferably, the box retrieval motor 111 is arranged above the transmission shaft 1131 in a spaced manner. That is, the two intermediate pulleys are spaced apart in the up-down direction. Such an arrangement can reduce a size of the box retrieval assembly in the first direction and improve structural compactness while helping the cargo box 20 completely enter the accommodating space between the two box retrieval transmission assemblies 112. In another embodiment, the box retrieval motor 111 may also be arranged at a bottom portion of the mounting frame 12 and located below the transmission shaft 1131.

To improve stability of arrangement of the transmission shaft 1131, at least two rotating shaft seats 114 are arranged spaced apart on the mounting frame 12 along the second direction, and the transmission shaft 1131 rotatably penetrates through the rotating shaft seats 114. In this embodiment, three rotating shaft seats 114 are arranged. Two of the rotating shaft seats 114 are respectively arranged at two ends of the transmission shaft 1131, and the other rotating shaft seat 114 is arranged in the middle of the transmission shaft 1131. A bearing is sheathed between the rotating shaft seat 114 and the transmission shaft 1131, to improve smoothness of rotation of the transmission shaft 1131. In addition, the box retrieval motor 111 is mounted on the mounting frame 12 through a motor seat 116. Preferably, a lower end of the motor seat 116 is mounted on the rotating shaft seat 114 located in the middle. Therefore, while the height of the box retrieval motor 111 is raised, the height of the motor seat 116 can be lowered, thereby improving structural compactness.

The box retrieval motor 111 and the synchronizing transmission assembly 113 are both arranged on one side of the mounting frame 12. To prevent the box retrieval assembly from colliding with the box retrieval motor 111 when the box retrieval assembly moves in the first direction, a detection member 14 is arranged on the mounting frame 12. The detection member 14 is a photoelectric sensor configured to detect a moving stroke of the box retrieval assembly along the first direction, and the detection member 14 is communicatively connected to a controller of the transporter robot 100, so that the controller can control operation of the box retrieval assembly based on a detection signal of the detection member 14, to prevent the box retrieval assembly from colliding with the box retrieval motor 111.

The mounting frame 12 includes a mounting base plate 121 arranged horizontally and a mounting side plate 122 arranged vertically on the mounting base plate 121. Two mounting side plates 122 are arranged spaced apart along the second direction, and the two box retrieval transmission assemblies 112 are mounted respectively on inner sides of the two mounting side plates 122. A height of the mounting side plate 122 is higher than a height of the box retrieval transmission assembly 112, so that the mounting side plate 122 can protect the box retrieval transmission assembly 112.

In this embodiment, the driven pulley 1122 is rotatably mounted on the mounting side plate 122. Specifically, the mounting side plate 122 is connected to a wheel mounting member 115. The wheel mounting member 115 includes a wheel axle portion 1151 and a plug portion. The plug portion is detachably connected to the mounting side plate 122, and the driven pulley 1122 is rotatably sleeved over the wheel axle portion 1151. Further, the mounting side portion is provided with an insertion hole 1221, and the wheel axle portion 1151 is inserted into the insertion hole 1221, thereby improving mounting positioning of the driven pulley 1122 on the mounting side plate 122.

In this embodiment, the box retrieval assembly includes a connecting member 132 and a box retrieval member 131. The connecting member 132 extends along the second direction and two ends thereof are connected to two transmission belts 1123 respectively. The box retrieval member 131 is connected to a middle position of the connecting member 132 in the length direction. The box retrieval member 131 is configured to pick up the cargo box 20. The connecting member 132 is preferably connected to a belt portion on an upper side of the transmission belt 1123 to avoid interference with the driven pulley 1122 and the driving pulley 1121 during movement.

More preferably, the box retrieval assembly further includes two belt fastening members 133 connected to two ends of the connecting member 132. The belt fastening member 133 is detachably connected to the connecting member 132. The belt fastening member 133 is detachably connected to the transmission belt 1123.

The box retrieval member 131 can be switched between a state of maintaining a connection to at least one surface of the cargo box 20 and a state of disconnecting from the at least one surface of the cargo box 20. When the box retrieval member 131 and the cargo box 20 remain a connected state, the box retrieval member 131 can carry the cargo box 20 and enter the accommodating space, to transfer the cargo box 20 in the inventory receptacle to the transporter robot, or carry the cargo box 20 and exit the accommodating space, to transfer the cargo box 20 on the transporter robot to the inventory receptacle. When the cargo box 20 is completely transferred into the accommodating space, or when the cargo box completely enters a storage position in the inventory receptacle, the box retrieval member 131 is disconnected from the cargo box 20. The box retrieval member 131 is preferably connected to a side surface of the box body 20 through magnetic suction, hooking, or snapping, to improve the convenience of connecting and disconnecting the box retrieval member 131 to or from the box body 20.

In this embodiment, the box retrieval member 131 hooks one side surface of the cargo box 20, which can simplify the structure of the box retrieval member 131 while improving the convenience of connecting the box retrieval member 131 and the cargo box 20. In addition, hooking can be achieved without arranging a drive member. That is, the box retrieval member 131 and the box body 20 can be separated or connected with low costs. Specifically, the box retrieval member 131 includes a connecting plate portion 1311 and a hook plate portion 1312 that are vertically connected. The connecting plate portion 1311 is arranged horizontally and connected to the connecting member 132. The hook plate portion 1312 is arranged vertically and is located on a side of the connecting member 132 away from the box retrieval motor 111. A lower end of the hook plate portion 1312 is connected to an upper surface of the connecting plate portion 1311.

To help the box retrieval member 131 hook the cargo box 20, an adapter 202 matching the hook plate portion 1312 is arranged on the cargo box 20. In this embodiment, the adapter 202 is of an L-shaped structure. One end of the adapter 202 is vertically connected to a side surface of a box body 201 of the cargo box 20, and an other side is set to extend downward. The adapter 202 forms, on a side surface of the box body 201, a hook groove with an opening facing downward. The hook plate portion 1312 can be inserted into the hook groove.

In this embodiment, the hook plate portion 1312 is inserted into the hook groove from a lower side of the adapter 202. In this case, when the box retrieval member 131 is connected to the cargo box 20, only the lifting assembly 6 needs to be used to adjust an in the up-down direction position of the box retrieval member 131, and the transporter robot 100 does not need to move as a whole, leading to strong box retrieval convenience.

Further, to reduce friction between the mounting base plate 121 and the cargo box 20 and reduce wear on the mounting base plate 121, a friction strip 15 is arranged on the mounting base plate 121, and the friction strip 15 is arranged in a protruding manner on an upper surface of the mounting base plate 121. In addition, the friction strip 15 extends along the first direction. When the cargo box 20 enters between the two mounting side plates 122, a bottom surface of the cargo box 20 abuts against an upper surface of the friction strip 15, to avoid direct contact between the bottom surface of the cargo box 20 and the mounting base plate 121. Preferably, a plurality of friction strips 15 are arranged along the second direction, thereby reducing the width of a single friction strip 15 while ensuring the support stability for the cargo box 20.

As shown in FIG. 1, in this embodiment, the transporter robot 100 further includes a plurality of temporary storage partitions 2 arranged spaced apart along the height direction of gantry 4. Each temporary storage partition 2 is vertically connected to the support column 41. Each temporary storage partition 2 can be configured to temporarily store one cargo box 20. Such an arrangement enables the transporter robot 100 to transport a plurality of cargo boxes 20 at a time, thereby improving the efficiency of transporting cargo boxes 20. To avoid interference between the box retrieval assembly and the temporary storage partition 2, the box retrieval assembly and the temporary storage partition 2 are located on two opposite sides of the gantry 4, and the box retrieval assembly and the lifting frame 61 are connected by a rotary mechanism 7, to allow the box retrieval assembly to rotate around a vertical axis. An opening direction of the accommodating space is changed, so that the box retrieval drive assembly 11 can drive the box retrieval assembly to transfer the cargo box 20 between the mounting frame 12 and the temporary storage partition 2.

As shown in FIG. 7 to FIG. 9, in this embodiment, the rotary mechanism 7 includes a slewing bearing 71, a rotation driving motor 73 and a rotation transmission assembly. The rotation driving motor 73 is mounted on the mounting frame 12, and the mounting frame 12 is connected to an inner ring of the slewing bearing 71. The lifting frame 61 is fixedly connected to an outer ring of the slewing bearing 71. The rotation transmission assembly is connected between the outer ring of the slewing bearing 71 and the rotation driving motor 73 and configured to drive the outer ring and the inner ring of the slewing bearing 71 to rotate relative to each other. Mounting the rotation driving motor 73 on the mounting frame 12 can allow the rotation driving motor 73 to move as the box retrieval assembly rotates, thereby preventing the rotation driving motor 73 from interfering with the rotation of the box retrieval assembly. Further, a pulley ring gear 711 is formed on the outer ring of the slewing bearing 71, and the rotation transmission assembly includes a rotating pulley 72 sleeved over an output shaft of the rotation driving motor 73 and a rotation transmission belt 74 wound around the rotating pulley 72 and the pulley ring gear 711. The output shaft of the rotation driving motor 73 is arranged vertically. When rotating, the rotation driving motor 73 drives, through the rotating pulley 72, the rotation transmission belt 74 to rotate, thereby driving the outer ring and the inner ring of the slewing bearing 71 to rotate relative to each other.

To mount the slewing bearing 71, an inner positioning ring 1211 is arranged on a lower surface of the mounting base plate 121. The slewing bearing 71 is sleeved over the inner positioning ring 1211. A positioning convex ring 6114 is arranged on an upper surface of the lifting assembly 6. The positioning convex ring 6114 and the slewing bearing 71 is coaxially arranged, and the outer ring of the slewing bearing 71 abuts against an upper surface of the positioning convex ring 6114, and is detachably connected to the positioning convex ring 6114. The arrangement of the positioning convex ring 6114 and the inner positioning ring 1211 can implement mounting and positioning of the slewing bearing 71 on the mounting frame 12 and the lifting assembly 6 respectively, thereby improving the mounting accuracy. To limit a rotation angle of the box retrieval assembly relative to the lifting frame 61, one of a bottom surface of the mounting frame 12 and a top surface of the lifting assembly 6 is provided with a limiting groove 6113, and the other is provided with a limiting column 75. An end of the limiting column 75 is inserted into the limiting groove 6113, and the limiting groove 6113 is an arc-shaped groove arranged coaxially with the slewing bearing 71. A central angle corresponding to the arc-shaped groove is an angle range in which the box retrieval assembly can rotate.

Embodiment 2: This embodiment provides a transporter robot 100 and a warehousing and logistics system. In addition, a structure of the transporter robot 100 provided in this embodiment is basically the same as that in Embodiment 1. There are only differences in some structural arrangements. Details of structures the same as those in Embodiment 1 are not described in this embodiment again. In this embodiment, a plurality of temporary storage partitions 2 are arranged spaced apart on a gantry 4 along a vertical direction. A box retrieval assembly is arranged on a same side of the temporary storage partitions 2 and can be raised and lowered by a lifting assembly 6. The temporary storage partition 2 includes a partition portion and baffle portions arranged on two opposite sides of the partition portion. The baffle portions and the partition portion form, in an enclosing manner, a temporary storage space with an opening facing away from the gantry 4.

A mounting base plate 121 of the box retrieval assembly is of a U-shaped structure with an opening facing toward the temporary storage partition 2, and includes a horizontal plate portion and vertical plate portions connected to two ends of the horizontal plate portion. The horizontal plate portion is located on a side of the gantry 4 away from the temporary storage partition 2. A box retrieval motor 111 is mounted on the horizontal plate portion. The two vertical plate portions are located on two opposite sides of the temporary storage partition 2 respectively, and two box retrieval transmission assemblies 112 are mounted on the two vertical plate portions respectively. The box retrieval assembly is located above the temporary storage partition 2 and is located on a side of the gantry 4 on which the temporary storage partition 2 is mounted.

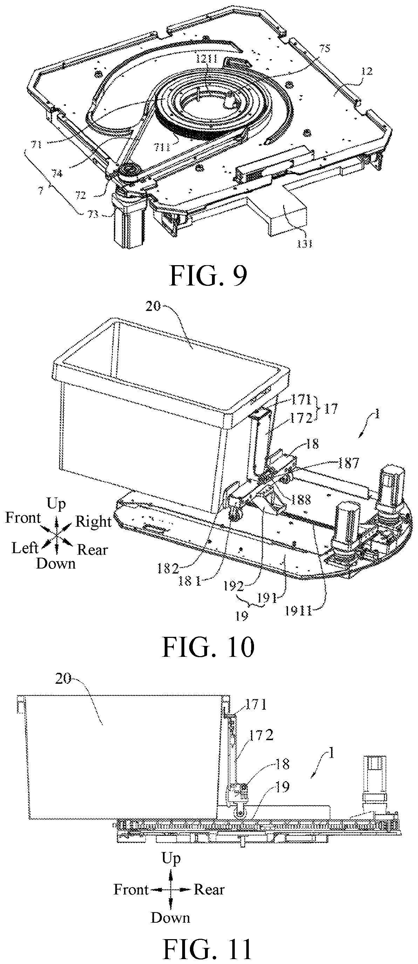

Embodiment 3: This embodiment provides a transporter robot and a warehousing and logistics system. In addition, a structure of the transporter robot provided in this embodiment is basically the same as that in Embodiment 1. There are only differences in arrangements of the box retrieval assembly and the box retrieval drive assembly. Details of structures the same as those in Embodiment 1 are not described in this embodiment again. As shown in FIG. 10, in this embodiment, a box retrieval member 131 includes two arm plates 134 that are arranged opposite to each other and spaced apart along a first direction and a connection assembly connected between first ends of the two arm plates 134. The connection assembly is connected to a box retrieval drive assembly 11. A hook member 1341 is arranged in a protruding manner on a second end of the arm plate 134 in a direction toward the other arm plate 134. The hook member 1341 can hook a vertical protruding rib 204 on a surface of a cargo box 20. The box retrieval transmission assembly 112 includes a gear and a rack 1124 that are meshed with each other. The rack 1124 is laid on a mounting base plate 121 along the first direction. The gear is meshed with the rack 1124 and is transmission-connected to a box retrieval motor 111. The box retrieval assembly further includes a drive frame 16. The box retrieval motor 111 and the box retrieval assembly are both mounted on the drive frame 16. In addition, one end of the drive frame 16 is supported on the box retrieval transmission assembly 112 through meshing between the gear and the rack 1124, and the other end thereof is connected to a slide member of a slide guide assembly. Further, in this embodiment, the gear includes a driving gear 1125 connected to a drive shaft of the box retrieval motor 111 and an intermediate gear 1126 meshed with the driving gear 1125. The intermediate gear 1126 is meshed with the rack 1124. The intermediate gear 1126 and the driving gear 1125 are arranged side by side in the up-down direction, so that the height of the box retrieval motor 111 can be raised, to avoid interference with the mounting base plate 121.

Embodiment 4: This embodiment provides a box retrieval assembly and a transporter robot. In addition, the box retrieval assembly provided in this embodiment is basically the same as that in Embodiment 7. There are only differences in the structure of the fork arm unit 81. Details of structures the same as those in Embodiment 4 are not described in this embodiment again.

In this embodiment, a hook member is arranged at a front end of an arm plate 811. The hook member is rotatably connected to the arm plate 811. A rotation driving member is arranged on the arm plate 811. The rotation driving member is connected to hook member and configured to drive the hook member to rotate, to enable the hook member to selectively protrudes from the arm plate 811 toward a surface of the other fork arm unit 81. That is, this embodiment provides the fork arm unit 81. When the hook member 812 protrudes from the arm plate 811 toward the surface of the other fork arm unit 81, the hook member may be configured to shift vertical protruding ribs or groove walls on two sides of a front end of a receptacle. When the hook member 812 does not protrude from the arm plate 811 toward the surface of the other fork arm unit 81, the fork arm unit 81 can be more conveniently separated from the receptacle. That is, when the fork arm unit 81 is docked to or separated from the receptacle, a distance between the two fork arm units 81 does not need to be adjusted. Therefore, the difficulty of docking and separating the fork arm unit 81 to and from the receptacle can also be reduced while receptacles of different sizes can be picked up, placed, and transported.

Embodiment 5: This embodiment provides a transporter robot 100 and a warehousing and logistics system. In addition, a structure of the transporter robot 100 provided in this embodiment is the same as that in Embodiment 1. There are only differences in the structure of the box retrieval assembly. Details of structures the same as those in Embodiment 1 are not described in this embodiment again. A box retrieval device 1 may move toward a cargo box 20 and away from the cargo box 20. For the convenience of description, the technical solutions of this application are described by using a direction in which the box retrieval device 1 moves toward the cargo box 20 as a forward direction and a direction in which the box retrieval device 1 moves away from the cargo box 20 as a backward direction.

As shown in FIG. 10 to FIG. 17, the box retrieval assembly according to this embodiment of this disclosure includes a push plate assembly 18 and a hooking assembly 17. The push plate assembly 18 is movable along a front-rear direction. The hooking assembly 17 is arranged on the push plate assembly 18 and includes a claw 171, and the hooking assembly 17 is capable of rotating forward and backward relative to the push plate assembly 18. The box retrieval assembly has a first position and a second position. In the first position, a front end of the claw 171 extends forward from the push plate assembly 18. In the second position, the hooking assembly 17 rotates backward by a first preset angle relative to the push plate assembly 18. The push plate assembly 18 is adapted to come into contact with a cargo box 20. The claw 171 is adapted to match the cargo box 20. Specifically, the push plate assembly 18 can move in the front-rear direction, to drive the hooking assembly 17 to move in the front-rear direction. The hooking assembly 17 is located above the push plate assembly 18. The hooking assembly 17 is configured to hook a handle on the cargo box 20, to pull the cargo box 20 to move. The push plate assembly 18 is configured to fit a rear end face of the cargo box 20, so that after the push plate assembly 18 completely fits the rear end face of the cargo box 20, the claw 171 extends into the handle on the cargo box 20, to implement matching between the claw 171 and the cargo box 20. When the box retrieval assembly is in the first position, the claw 171 is not in contact with the cargo box 20, or the claw 171 just comes into contact with the cargo box 20, but there is no interaction force between the claw 171 and the cargo box 20, and the claw 171 protrudes forward relative to the push plate assembly 18. When the push plate assembly 18 drives the hooking assembly 17 to continue to move forward, the claw 171 is rotated backward by an acting force from the cargo box 20. When the box retrieval assembly is in the second position, the claw 171 is rotated backward by the first preset angle by the acting force of the cargo box 20. In this case, the push plate assembly 18 is in contact with the rear end face of cargo box 20, and the claw 171 matches the handle of the cargo box 20. To this end, this embodiment of this disclosure provides a box retrieval assembly. The box retrieval assembly matches the push plate assembly 18 through the hooking assembly 17. In addition, when the push plate assembly 18 and the cargo box 20 are in complete contact, the hooking assembly 17 matches the cargo box 20, which can improve box retrieval accuracy. Moreover, at any position during storage and box retrieval of the cargo box 20, the box retrieval assembly is always located on a rear side of the cargo box 20, and may not occupy space on two sides of the cargo box 20, so that a gap between two adjacent cargo boxes 20 is reduced. A distance between two cargo boxes 20 may be reduced to 20 mm or even smaller, which increases warehousing density and further increases warehousing utilization.

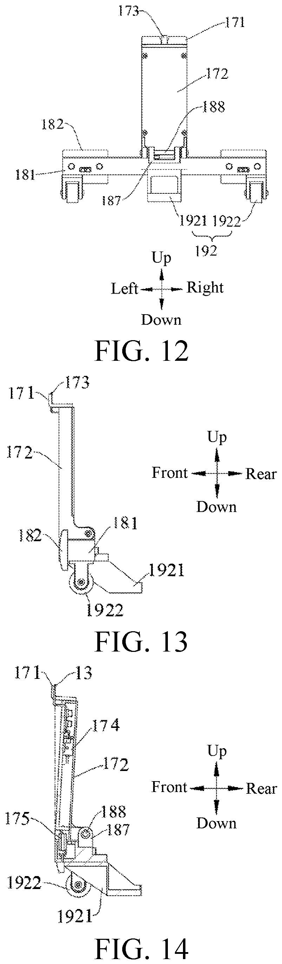

In some embodiments, the hooking assembly 17 further includes a bracket 172. The bracket 172 is rotatably connected to the push plate assembly 18. The claw 171 is arranged at a front end of the bracket 172, and the claw 171 extends forward from the bracket 172. Specifically, as shown in FIG. 13 and FIG. 14, a front end face of the claw 171 is in front of a front end face of the bracket 172. The bracket 172 extends along an up-down direction. An upper end of the bracket 172 is fixedly connected to the claw 171, and a lower end of the bracket 172 is rotatably connected to the push plate assembly 18, to help the hooking assembly 17 rotate relative to the push plate assembly 18.

In some embodiments, the hooking assembly 17 further includes a first signal plate 173 and a first sensor 174. The first sensor 174 is arranged in the bracket 172, and the first signal plate 173 is arranged on the bracket 172 and is capable of moving in the up-down direction relative to the bracket 172. In the first position, one end of the first signal plate 173 extends from the claw 171, and in the second position, the other end of the first signal plate 173 is capable of triggering the first sensor 174.

Specifically, the bracket 172 includes a cavity inside. The first sensor 174 is mounted in the cavity, and the first signal plate 173 is movable on the bracket 172 along the up-down direction. As shown in FIG. 13 and 14, in an embodiment in which the claw 171 needs to match a lower end of the handle, in the first position, an upper end of the first signal plate 173 extends upward from the claw 171, and in the second position, a lower end of the first signal plate 173 may trigger the first sensor 174.

In the embodiment in which the claw 171 needs to match the lower end of the handle, as shown in FIG. 13 and FIG. 14, when the box retrieval assembly is in the first position, the first signal plate 173 is not in contact with the handle of the cargo box 20, and the upper end of the first signal plate 173 is higher than an upper end of the claw 171. When the box retrieval assembly moves from the first position to the second position, the first signal plate 173 comes into contact with the handle of the cargo box 20. After being subjected to the acting force from the handle, the first signal plate 173 moves downward relative to the bracket 172 until the upper end of the first signal plate 173 is flush with the upper end of the claw 171. In this case, the lower end of the first signal plate 173 triggers the first sensor 174. The first sensor 174 transfers a signal to a controller, and the controller determines that claw 171 matches the handle of the cargo box 20.

In an embodiment in which the claw 171 needs to match the upper end of the handle, when the box retrieval assembly is in the first position, the first signal plate 173 is not in contact with the handle of the cargo box 20, and one part of the first signal plate 173 is lower than the lower end of the claw 171. When the box retrieval assembly moves from the first position to the second position, the first signal plate 173 comes into contact with the handle of the cargo box 20. After being subjected to the acting force from the handle, the first signal plate 173 moves upward relative to the bracket 172 until the one part of the first signal plate 173 is flush with the lower end of the claw 171. In this case, the lower end of the first signal plate 173 triggers the first sensor 174. The first sensor 174 transfers a signal to a controller, and the controller determines that claw 171 matches the handle of the cargo box 20. Therefore, in the box retrieval assembly according to this embodiment of this disclosure, the first sensor 174 is arranged in the bracket 172, to conveniently protect the first sensor 174, and the first signal plate 173 and the first sensor 174 are utilized to conveniently detect whether the claw 171 moves to the second position, thereby improving the degree of automation of the box retrieval assembly.

In some embodiments, the claw 171 includes a through hole (not shown). One end of the first signal plate 173 extends from the claw 171 through the through hole, and the lower end of the first signal plate 173 is located in the bracket 172. Specifically, in the embodiment in which the claw 171 needs to match the lower end of the handle, as shown in FIG. 13 and FIG. 14, a through hole running through the claw 171 along the up-down direction is provided in the claw 171, and the upper end of the first signal plate 173 can pass through the through hole and move along the up-down direction relative to the through hole. The lower end of the first signal plate 173 is located in the bracket 172, and the first signal plate 173 is located above the first sensor 174. When the box retrieval assembly moves to the second position, when the upper end of the first signal plate 173 is moved downward by an acting force from the handle, the lower end of the first signal plate 173 may trigger the first sensor 174.

In some embodiments, the box retrieval assembly further includes a first return member 175. The first return member 175 is connected to the push plate assembly 18 and the bracket 172, and the first return member 175 has an acting force to cause the bracket 172 to return to the first position. Specifically, as shown in FIG. 14, an upper end of the first return member 175 is connected to the bracket 172, and a lower end of the first return member 175 is connected to the push plate assembly 18. When the box retrieval assembly is in the second position, when the claw 171 is in contact with the cargo box 20, the claw 171 is moved backward by an acting force from the cargo box 20, to drive the bracket 172 to rotate backward relative to the push plate assembly 18. In this case, the first return member 175 is subject to an acting force from the bracket 172. When the claw 171 leaves the cargo box 20, the first return member 175 causes the bracket 172 to rotate forward, thereby causing the claw 171 to return to the first position. Therefore, in the box retrieval assembly of this disclosure, the first return member 175 is utilized to enable the bracket 172 to return from the second position to the first position.

In some embodiments, as shown in FIG. 10 and FIG. 12, the box retrieval assembly further includes a seat 187 and a rotating shaft 188. The seat 187 is located on the push plate assembly 18. The rotating shaft 188 penetrates through the seat 187 and a bottom end of the bracket 172, to rotatably connect the bracket 172 and the seat 187.

Specifically, the seat 187 is configured to connect the bracket 172 and the push plate assembly 18. The seat 187 is fixedly connected to the push plate assembly 18. Both the seat 187 and the bracket 172 are provided with hinge holes that run through the seat 187 and the bracket 172 along a left-right direction. The rotating shaft 188 penetrates through the hinge holes, to connect the connecting bracket 172 to the seat 187. Therefore, in the box retrieval assembly of this embodiment, the seat 187 and the rotating shaft 188 are utilized to facilitate rotation of the bracket 172 relative to the seat 187, and the seat 187 and the rotating shaft 188 have simple structures and are easy to process.

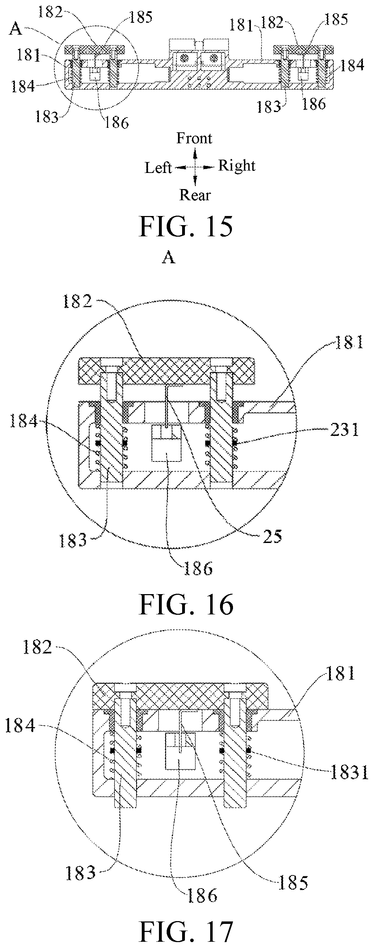

In some embodiments, as shown in FIG. 15 to FIG. 17, the push plate assembly 18 includes a base 181 and a push plate 182. The push plate 182 is located on a front side of the base 181, and the push plate 182 is movable relative to the base 181 in the front-rear direction. The box retrieval assembly further has a third position located between the first position and the second position. In the third position, the hooking assembly 17 rotates backward by a second preset angle relative to a support assembly 19. The second preset angle is less than the first preset angle. The push plate 182 and the base 181 are spaced apart in the front-rear direction. At second position, the push plate 182 abuts against the base 181. Specifically, the push plate 182 and the base 181 are arranged spaced apart, and push plate 182 is movable along the front-rear direction. In other words, the push plate 182 may move toward the base 181 or away from the base 181. When the box retrieval assembly goes to a shelf to pick up the cargo box 20, the robot first moves to the vicinity of the shelf, and then the box retrieval assembly is located in the first position. In this case, the claw 171 is not in contact with a rear end face of the cargo box 20, or the claw 171 just comes into contact with the cargo box 20, but there is no interaction force between the claw 171 and the cargo box 20, and the push plate 182 is not in contact with the rear end face of the cargo box 20. The box retrieval assembly continues to move forward to the third position. In this case, after coming into contact with the cargo box 20, the claw 171 rotates backward to the second preset angle, a front end face of the push plate 182 comes into contact with the rear end face of the cargo box 20, and a rear end face of the push plate 182 is not in contact with the base 181. The box retrieval assembly continues to move forward to the second position. In this case, the claw 171 continues rotating backward and rotates to the first preset angle, the front end face of the push plate 182 comes into contact with the rear end face of the cargo box 20, and the rear end face of the push plate 182 comes into contact with the base 181.

In some embodiments, as shown in FIG. 12 to FIG. 14, the push plate assembly 18 further includes a guide member 183. A front end of the guide member 183 is connected to the push plate 182, and the guide member 183 at least partially extends into the base 181 and is movable in the front-rear direction relative to the base 181.

Specifically, the guide member 183 extends along the front-rear direction, the front end of the guide member 183 is fixedly connected to the push plate 182, and a rear end of the guide member 183 extends into the base 181. Therefore, in the box retrieval assembly according to this embodiment of this disclosure, the guide member 183 may be utilized to guide movement of the push plate 182, to cause the push plate 182 to move along the front-rear direction, which is beneficial to improving the reliability of the box retrieval assembly. Optionally, the guide member 183 is a pin. The base 181 is provided with a guide hole or a guide groove. The guide member 183 may match the guide hole or the guide groove.

In some embodiments, as shown in FIG. 15 to FIG. 17, there are at least two guide members 183. The at least two guide members 183 are arranged spaced apart in the first direction. The first direction (the left-right direction shown in FIG. 15) is orthogonal to the front-rear direction and the up-down direction. For example, as shown in FIG. 31, there are two guide members 183. The two guide members 183 are arranged spaced apart along the left-right direction. Front ends of all guide members 183 are connected to the same push plate 182, and rear ends of all the guide members 183 extend into the base 181. Therefore, in the box retrieval assembly according to this embodiment of this disclosure, a plurality of guide members 183 may be utilized to smoothen movement of the push plate 182, which improves the reliability of the box retrieval assembly.

In some embodiments, as shown in FIG. 15 to FIG. 17, the push plate assembly 18 further includes an elastic member 184. The elastic member 184 is located in the base 181, one end of the elastic member 184 abuts against the guide member 183, the other end of the elastic member 184 abuts against the base 181, and the elastic member 184 has an elastic force to cause the guide member 183 to move forward. Specifically, the guide member 183 may drive the elastic member 184 to move during movement. The elastic member 184 is a tension spring or a compression spring. For example, the elastic member 184 is a compression spring. A front end of the elastic member 184 is connected to the guide member 183, and a rear end of the elastic member 184 is connected to a rear wall of the base 181. When the guide member 183 moves backward, after the elastic member 184 is compressed, the guide member 183 is caused to move forward. Alternatively, the elastic member 184 is a tension spring. The front end of the elastic member 184 is connected to a front wall of base 181, and the rear end of elastic member 184 is connected to the guide member 183. When the guide member 183 moves backward, after elastic member 184 is tensioned, the guide member 183 is caused to move forward. Therefore, in the push plate assembly 18 according to this embodiment, the elastic member 184 may be utilized to cause the guide member 183 to move forward, to push the push plate 182 to move forward, thereby returning the push plate 182.

In some embodiments, as shown in FIG. 16 and FIG. 17, the guide member 183 includes an annular protrusion 1831. The annular protrusion 1831 is located in the base 181, and one end of the elastic member 184 abuts against the annular protrusion 1831. Specifically, the one end of the elastic member 184 abuts against the annular protrusion 1831, and the other end of the elastic member 184 abuts against the base 181. Therefore, interaction between the annular protrusion 1831, the guide member 183, and the elastic member 184 is utilized, so that when the push plate 182 is in contact with the cargo box 20, the push plate 182 can snugly fit the rear end of the cargo box 20, which improves the accuracy of matching between the claw 171 and the cargo box 20 and further, ensures the box retrieval accuracy.

In some embodiments, as shown in FIG. 16 and FIG. 17, the push plate assembly 18 further includes a second signal plate 185 and a second sensor 186. The second sensor 186 is located in the base 181, a front end of the second signal plate 185 is connected to the push plate 182, and in the second position, the second signal plate 185 is at least partially located in the base 181 and is capable of triggering the second sensor 186. Specifically, the second sensor 186 and the second signal plate 185 are arranged opposite to each other in the front-rear direction. The front end of the second signal plate 185 is outside the base 181 and fixed onto the push plate 182. A rear end of the second signal plate 185 extends into the base 181. The second sensor 186 is electrically connected to the controller.

In the first position, the push plate 182 is not in contact with base 181. In this case, the second signal plate 185 does not trigger the second sensor 186. In the third position, the push plate 182 and the base 181 are spaced apart in the front-rear direction, and the push plate 182 is in contact with the rear end face of the cargo box 20. When the box retrieval assembly continues to move forward, after the push plate 182 is subjected to the acting force from the cargo box 20, a distance between the push plate 182 and the base 181 is reduced until the push plate 182 comes into contact with the base 181, to cause the second signal plate 185 to trigger the second sensor 186. The second sensor 186 transfers a signal to the controller. The controller determines that in this case, the push plate 182 snugly fits the cargo box 20, and then, in this case, the box retrieval assembly is located in the second position. Therefore, in the box retrieval assembly according to this embodiment of this disclosure, the second signal plate 185 and the second sensor 186 are utilized to conveniently detect whether the push plate assembly 18 moves to the second position, thereby improving the degree of automation of the box retrieval assembly.

In some embodiments, as shown in FIG. 15 and FIG. 16, there are at least two push plate assemblies 18, the at least two push plate assemblies 18 are arranged spaced apart in the first direction, the first direction is orthogonal to the front-rear direction and the up-down direction, and the hooking assembly 17 is located between the adjacent push plate assemblies 18. Therefore, the two push plate assemblies 18 are utilized to match the hooking assembly 17, so stabilize forces to which the cargo box 20 is subjected in a process of transferring the cargo box 20, thereby improving the reliability of the box retrieval assembly.

In some embodiments, as shown in FIG. 10 to FIG. 12, the box retrieval assembly further includes a support assembly 19. The support assembly 19 includes a support seat 191 and a support component 192. The support component 192 is arranged on the support seat 191 and is movable along the front-rear direction relative to the support seat 191, and the support component 192 is mounted at a bottom portion of the push plate assembly 18. Specifically, the auxiliary support assembly 19 is connected to the push plate assembly 18. The auxiliary support assembly 19 can move in the front-rear direction relative to the support seat 191, to drive the push plate assembly 18 and the hooking assembly 17 to move on the support seat 191. When the box retrieval assembly goes to the shelf to pick up the cargo box 20, when the box retrieval assembly moves to the second position, the support component 192 is utilized to drive the hooking assembly 17 and the push plate assembly 18 to move backward, which in turn drive the cargo box 20 to move backward, so that the cargo box 20 is moved from the shelf to the support seat 191. Therefore, in the box retrieval assembly according to this embodiment, the support assembly 19 may be utilized to transfer the cargo box 20 to the support seat 191 or transfer the cargo box 20 from the support seat 191 to the shelf.

Embodiment 6: To resolve the problem that a gantry assembly shakes when a cargo transporter robot 10 picks up and places a material box at a high position, this disclosure provides a cargo transporter robot with an anti-shaking function. The cargo transporter robot includes a chassis 3, a gantry 4, a lifting assembly 6, and at least two auxiliary support devices 5. The gantry 4 is arranged on the chassis 3. The lifting assembly 6 is configured to move along the gantry 4 in the up-down direction. The at least two auxiliary support devices 5 are controlled by respective drive assemblies, and are respectively arranged on two opposite sides of the cargo transporter robot, and the at least two auxiliary support devices 5 are configured to extend, relative to the cargo transporter robot, to abut against or separate from racks on corresponding sides of the cargo transporter robot.

In an embodiment of this disclosure, the auxiliary support devices 5 may be arranged on two opposite sides of the lifting assembly 6, so that the auxiliary support devices 5 may move on the gantry 4 with the lifting assembly 6. When the lifting assembly 6 moves to a proper position, the auxiliary support devices 5 respectively extend to the two opposite sides of the lifting assembly 6, and abut against the racks on the corresponding sides of the lifting assembly 6, which ensures the stability of the cargo box transporter robot.

In an embodiment of this disclosure, the auxiliary support devices 5 may be arranged on two opposite sides on the gantry 4. For example, the auxiliary support devices 5 may be arranged in an upper region, a middle region, or a lower region of the gantry 4 according to requirements. The auxiliary support devices 5 may maintain the gantry 4 on brackets of two adjacent racks, which ensures the stability of the cargo box transporter robot when a cargo box is picked up or returned. It should be noted that the auxiliary support devices 5 may also be connected to a temporary storage mechanism, which is not described herein in detail again.

In an embodiment of this disclosure, the auxiliary support devices 5 may be arranged on two opposite sides of the chassis 3. For example, after a traveling mechanism in the chassis 3 drives the entire cargo transporter robot to a target position, the auxiliary support devices 5 on the two opposite sides of the chassis 3 extend to abut against the racks on the corresponding sides, so that the chassis 3 of the cargo transporter robot can be stably maintained between two adjacent racks. Even if the gantry assembly shakes when a box at a high position of the rack is picked up or returned, the robot can be from falling, which improves the safety of the cargo transporter robot during working.

In the cargo transporter robot of this disclosure, the auxiliary support devices 5 on two sides are controlled by their respective drive assemblies. That is, the cargo transporter robot may drive the auxiliary support devices 5 respectively to extend to corresponding positions according to actual distances between the sides and the corresponding racks. Therefore, the cargo transporter robot may be adaptively adjusted according to factors such as the ground unevenness and the inclination of the vehicle body, to prevent the auxiliary support devices 5 from forcible twisting the gantry 4.

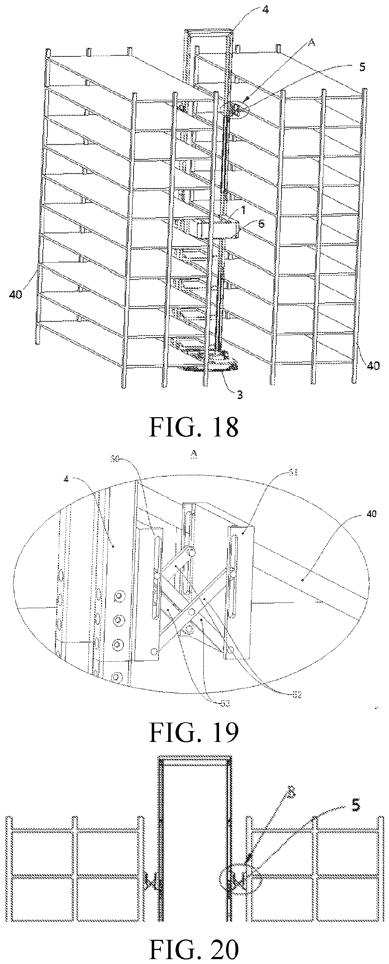

Referring to FIG. 18 to FIG. 25, the cargo transporter robot further includes two auxiliary support devices 5. The two auxiliary support devices 5 are controlled by respective drive assemblies, and are respectively arranged on two opposite sides of the gantry 4, and the two auxiliary support devices 5 are configured to extend, relative to the gantry 4, to abut against or separate from racks 40 on corresponding sides of the gantry 4.

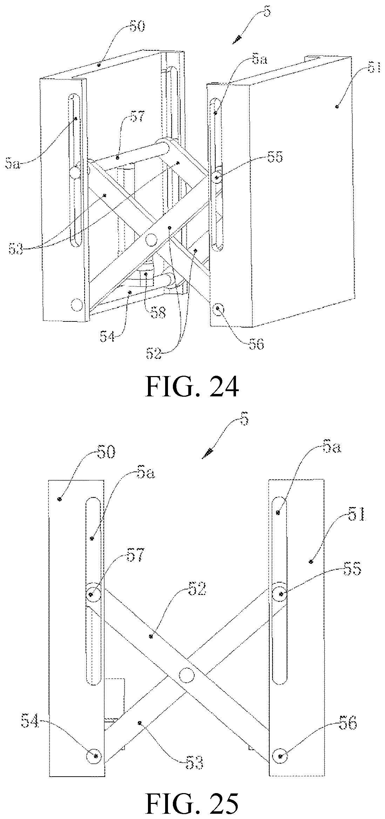

Specifically, referring to FIG. 40 and FIG. 41, which are schematic three-dimensional structural diagrams of the auxiliary support device 5 shown in FIG. 34. In this embodiment, an auxiliary support element 51 includes a fixed base 50 and a support element 51 connected to the fixed base 50 by a telescopic mechanism in a telescopic manner. The telescopic mechanism is controlled by a drive assembly 58 and configured to drive the support element 51 to move relative to the fixed base 50 to abut against or separate from the rack 40 on the corresponding side. To better understand the structure of the auxiliary support device 5, also refer to FIG. 25. The fixed base 50 is specifically a square plate, and is fixedly connected to a sidewall of the gantry 4 by threaded connection or bonding. The support element 51 has a same shape as the fixed base 50. The support element 51 is connected to the fixed base 50 by a telescopic mechanism in a telescopic manner. Under the action of the drive assembly 58, the telescopic mechanism drives the support element 51 to move toward or away from the support element 51.

The telescopic mechanism includes a scissor unit. The scissor unit includes a first connecting rod mechanism and a second connecting rod mechanism that are arranged crosswise and that are hingedly connected together at an intersection. One end portion of the first connecting rod mechanism is hingedly connected to the fixed base 50, and the other end portion thereof is movably connected to the support element 51 in a slidable manner. One end portion of the second connecting rod mechanism is hingedly connected to the support element 51, and the other end portion thereof is movably connected to the fixed base 50 in a slidable manner.

Specifically, the first connecting rod 52 mechanism includes two first connecting rods 52 arranged in parallel, and the second connecting rod 53 mechanism includes two second connecting rods 53 arranged in parallel. Same ends of the two first connecting rods 52 are hingedly connected to a same articulated shaft, and same ends of the two second connecting rods 53 are hingedly connected to a same articulated shaft. The first connecting rod 52 and the second connecting rod 53 on a same side intersect with each other and are hingedly connected together. More specifically, lower ends of the two first connecting rods 52 are both hingedly connected to a first lower articulated shaft 54, and upper ends of the two first connecting rods 52 are respectively hingedly connected to two first upper articulated shafts 55 arranged coaxially. Moreover, the two first upper articulated shafts 55 are both movably connected to the support element 51 in a slidable manner. The support element 51 is provided with two elongated holes 5a. The two first upper articulated shafts 55 respectively penetrate through the two elongated holes 5a and slide in the up-down direction along the elongated holes 5a relative to the support element 51. Similarly, lower ends of the two second connecting rods 53 are respectively hingedly connected to two second lower articulated shafts 56 arranged coaxially. The two second lower articulated shafts 56 are fixedly or rotatably connected to the support element 51. Upper ends of the two second connecting rods 53 are both hingedly connected to a second upper articulated shaft 57. The second upper articulated shaft 57 is movably connected to the fixed base 50 in a slidable manner. Specifically, the fixed base 50 is also provided with two elongated holes 5a. The second upper articulated shaft 57 penetrates the two elongated holes 5a and may slide along the elongated holes 5a under the action of an external force.

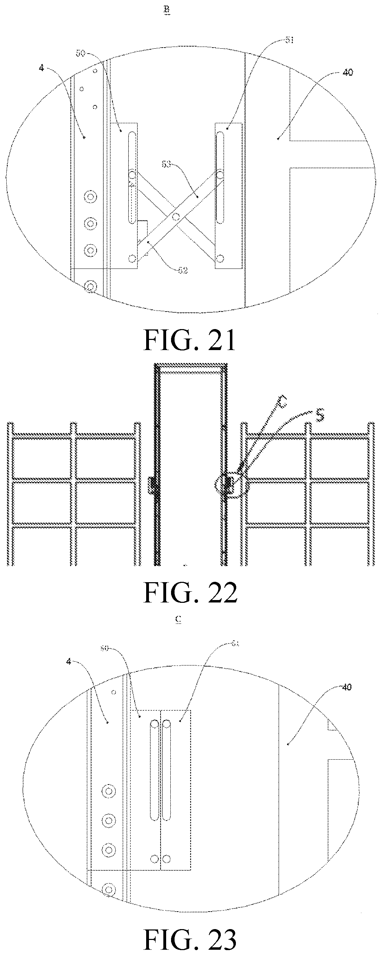

The drive assembly 58 that drives the telescopic mechanism includes a screw push rod motor. A housing of the screw push rod motor is fixedly connected to the fixed base 50, and a drive shaft thereof is fixedly connected to the second upper articulated shaft 57. The motor is controlled to rotate forward or rotate backward, so that the drive shaft of the motor can drive the second upper articulated shaft 57 to slide in the up-down direction along the elongated holes 5a. Specifically, when the push rod screw motor rotates forward, the second upper articulated shaft 57 slides upward along the elongated holes 5a. In this case, the first connecting rod mechanism and the second connecting rod mechanism of the scissor unit retract, and then, the fixed base 50 and the support element 51 both move gradually toward each other. That is, the cargo transporter robot is in a working state shown in FIG. 22 as a whole. That is, the auxiliary support device 5 is in a retracted state relative to the gantry 4, and the support element 51 thereof does not abut against the rack 40 on the corresponding side. In this case, the auxiliary support device 5 does not implement a supporting function. Conversely, when the push rod screw motor rotates backward, the second upper articulated shaft 57 slides downward along the corresponding elongated holes 5a. In this case, the first connecting rod mechanism and the second connecting rod mechanism of the scissor unit extend, to cause the fixed base 50 and the support element 51 to move gradually away from each other. That is, the cargo transporter robot is in the working state in FIG. 22 as a whole. That is, the auxiliary support device 5 is in an extended state relative to the gantry 4, and the support element 51 thereof extends to abut against the rack 40 on the corresponding side. In this case, the auxiliary support device 5 utilizes the two racks 40 on opposite sides to support the gantry 4, to prevent the gantry 4 from shaking.

Embodiment 7: A design height of an existing multi-cargo box robot is high, leading to high safety requirement on operation of the entire robot. A telescopic fork mechanism may fail to retract in place under an abnormal condition. In this case, if the robot continues to perform a subsequent action, danger may be caused to the robot, a shelf, a cargo box, or even working personnel. Therefore, it is particularly important to detect whether the telescopic fork mechanism retracts in place.

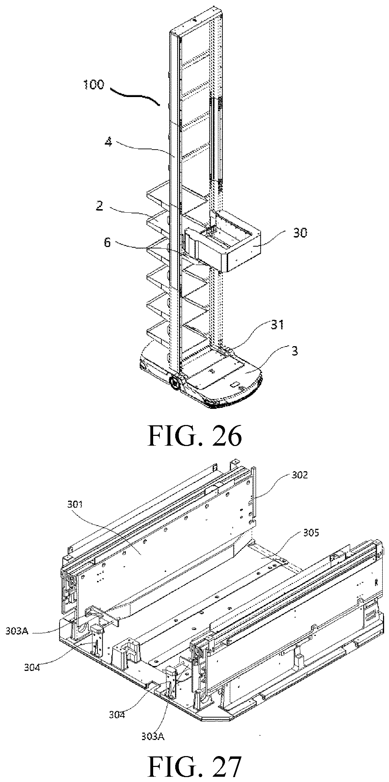

A robot provided in this embodiment of this application is described below with reference to FIG. 26 to FIG. 29.

A robot 100 further includes a telescopic fork device 30 that can rise or fall and move along a height direction of a gantry 4 and a lifting assembly 6 that drives the telescopic fork device 30 to rise or fall and move along the height direction of the gantry 4. For example, the lifting assembly 6 is slidably arranged on a surface of the gantry 4 facing away from a temporary storage partition 2 along the height direction of the gantry 4. The lifting assembly 6 may be driven by any one of a gear rack mechanism, a lead screw mechanism, or a synchronizing belt mechanism, to enable the lifting assembly 6 to vertically rise or fall along the gantry 4.

Referring to FIG. 26 and FIG. 27, a telescopic fork device 30 configured to pick up or return a cargo box is arranged on the lifting assembly 6. The telescopic fork device 30 rises or falls to different heights with the lifting assembly 6, and performs a box retrieval or return operation on cargo boxes on levels at different heights.

When the telescopic fork device 30 is connected to the lifting assembly 6, the telescopic fork device 30 is connected to the lifting assembly 6 by a rotating assembly, and the rotating assembly is configured to drive the telescopic fork device 30 to rotate horizontally. For example, the telescopic fork device 30 includes a movable pallet 305 connected to the lifting assembly 6, the movable pallet 305 is connected to the lifting assembly 6 by a rotating assembly, and the movable pallet 305 can rotate around a center of the rotating assembly. The movable pallet 305 moves in place to match both a shelf and a temporary storage partition 2 on each level. Driven by the rotating assembly, the telescopic fork device 30 can pick up and place cargo boxes on shelves on two sides of a lane, to pick or return the cargo boxes in two directions.

When specifically implementing an operation of picking up or returning a cargo box, the telescopic fork device 30 further includes multi-stage telescopic machines 301 arranged opposite to each other along two sides of the movable pallet 305. Two multi-stage telescopic machines 301 are arranged, and the multi-stage telescopic machine 301 is at least three-stage telescopic. When being a three-stage telescopic mechanism, the multi-stage telescopic machine 301 includes a first-section arm fixedly arranged on the movable pallet 305, an intermediate arm slidably connected to the first-section arm, and a last-section arm slidably connected to the intermediate arm. The three arms may slide along a cargo box retrieval direction, to implement retraction and extension of the multi-stage telescopic machine 301 along the cargo box retrieval direction.

During an operation of lifting, picking up, or returning a cargo box, front ends of oppositely arranged last-section arms along the cargo box retrieval direction are rotatably connected to a front shifting finger 302, and a rear shifting finger 303A is fixedly arranged on rear ends of the oppositely arranged last-section arms along the cargo box retrieval direction. Both the front shifting finger 302 and the rear shifting finger 303A move with the last-section arm along the cargo box retrieval direction. It can be learned from the foregoing descriptions that regardless whether the multi-stage telescopic machine 301 is a three-stage telescopic mechanism or a four-stage telescopic mechanism, assembly positions of the front shifting finger 302 and the rear shifting finger 303A remain unchanged, and the front shifting finger 302 and the rear shifting finger 303A are both assembled on the last-section arms.

The front shifting finger 302 is rotatably connected to the last-section arms through a steering gear. The front shifting finger 302 has two positions: a working position and an avoidance position. When the front shifting finger 302 works, the steering gear drives the front shifting finger 302 to rotate to a horizontal position. The two front shifting fingers 302 are arranged opposite to each other, when the multi-stage telescopic machine 301 retracts, a to-be-transported cargo box can be pulled.

The rear shifting finger 303A is arranged on an end of the last-section arm away from the front shifting finger 302. The arranged rear shifting finger 303A is configured to push a cargo box on the movable pallet 305 to the shelf or the temporary storage partition 2 for storage. As shown in FIG. 27, two rear shifting fingers 303A may be arranged opposite to each other. During extension of the multi-stage telescopic machine 301, the cargo box on the movable pallet 305 is blocked and pushed by the rear shifting fingers 303A on two sides, so that the cargo box on the movable pallet 305 is pushed to the shelf or the temporary storage partition 2 of the robot itself.

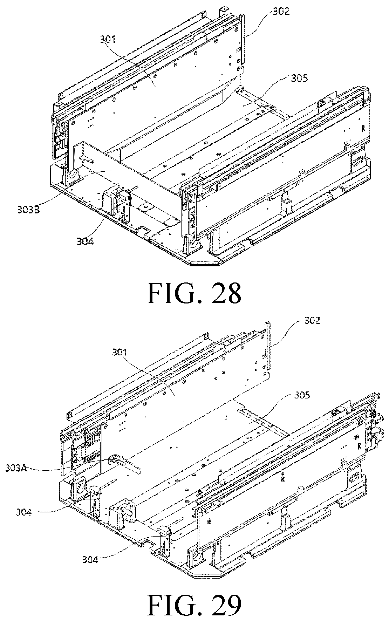

As shown in FIG. 28, the rear shifting finger 303B may alternatively be integrally connected between the last-section arm on the two sides, and also blocks and pushes the cargo box on the movable pallet 305 during extension of the multi-stage telescopic machine 301. Still referring to FIG. 29, the telescopic fork device 30 may fail to retract in place in an abnormal state. In this case, if the robot 1 continues to perform a subsequent action, danger may be caused to the robot, a shelf, a cargo box, or even working personnel. To this end, this application uses the fixedly arranged rear shifting finger 303A as a positioning identifier to detect in-place information of the multi-stage telescopic machine 301.

When position information of the rear shifting finger 303A is specifically detected, the telescopic fork device 30 further includes an in-place detection device 304 configured to detect a position of the rear shifting finger 303A. The in-place detection device 304 is fixedly assembled on the movable pallet 305 and is configured to detect the position information of the rear shifting finger 303A. The in-place detection device 304 is any one of a diffuse reflection sensor, a laser sensor, a micro switch, or a limit switch arranged on the movable pallet 305 and corresponding to the rear shifting finger 303A When there are two rear shifting fingers 303A arranged opposite to each other, there are two in-place detection devices 304, which are respectively in one-to-one correspondence with the two rear shifting fingers 303A. When the rear shifting finger 303B is integrally connected between the last-section arms on both sides, there may be one or two in-place detection devices 304. In addition, a control device is further included. The control device is any one of a PLC controller, a microcontroller, or an industrial control computer. Moreover, after receiving the position information of the rear shifting finger 303A fed back by the in-place detection device 304, the control device controls the multi-stage telescopic machine 301, the chassis 3, the lifting assembly 6, the rotating assembly, and the like to work correspondingly, which are common technical means in the existing control methods. Details are not described herein again.

The control device controls, when the in-place detection device 304 detects that the position of the rear shifting finger 303A exceeds a set position, the chassis 3, the lifting assembly 6, and the rotating assembly to be locked. The control device is further configured to control, when the in-place detection device 304 detects that the rear shifting finger 303A does not exceed the set position, the chassis 3, the lifting assembly 6, and the rotating assembly to release a locked state. It should be specifically noted that the set position is an appropriate range, so that the rear shifting finger 303A can operate into this range under small mechanical motion errors and control errors, and in addition, it is ensured that after the rear shifting finger 303A operates into this range, when the robot is lifting, rotating, and traveling as a whole, the robot may not have its remaining components, shelves, cargo boxes, and the like scratched.

It can be learned from the foregoing descriptions that when a cargo box on a shelf is picked up to the robot 100 for transportation, the chassis 3 moves to the shelf of the to-be-picked-up cargo box, the lifting assembly 6 drives the telescopic fork device 30 to rise to a level at a same height as the to-be-picked-up cargo box, and in this case, the front shifting finger 302 is at the avoidance position. As shown in FIG. 29, the multi-stage telescopic machines 301 extend from the last-section arms along the intermediate arms on two sides of the to-be-picked-up cargo box. In this case, the in-place detection device 304 detects that the position of the rear shifting finger 303A exceeds a set position, and the control device controls the chassis 3, the lifting assembly 6, and the rotating assembly to enter a locked state. After the last-section arms fully extend, the intermediate arms extend along the first-section arms until the front shifting finger 302 is located at a back surface of the cargo box. The steering gear rotates to locate the front shifting finger 302 at the working position, and then during retraction of the multi-stage telescopic machines 301, the front shifting finger 302 pulls the cargo box from the shelf to the movable pallet 305. As shown in FIG. 28 or FIG. 29, after the intermediate arms and last-section arms gradually retract in place, the in-place detection device 304 detects that the rear shifting finger 303A returns to the set position, and the chassis 3, lifting assembly 6, and the rotating assembly are controlled to release the locked state.

Therefore, the control device controls the lifting assembly 6 to drive the telescopic fork device 30 to rise or fall to a position at a same height as an appropriate vacant temporary storage partition 2, and controls the rotating assembly to drive the movable pallet 305 to rotate backward by 90 degrees. The steering gear drives the front shifting finger 302 to the avoidance position. During extension of the multi-stage telescopic machine 301, the rear shifting finger 303A pushes the cargo box on the movable pallet 305 onto the temporary storage partition 2 for storage. During movement of the rear shifting finger 303A, the in-place detection device 304 detects that the position of the rear shifting finger 303A exceeds the set position. In this cases, the control device controls the chassis 3, the lifting assembly 6, and the rotating assembly to enter the locked state. Conversely, when the cargo box on the temporary storage partition 2 is placed on the shelf for storage, operations are performed in the same manner, and details are not described herein again. In this disclosure, the rear shifting finger 303A not only is configured to limit the cargo box, but also is used as a fixed-point mechanism. Only after the in-place detection device 304 detects whether the position of the rear shifting finger 303A is in place, the robot may be enabled to perform subsequent operations, which improves operation safety of the robot.

In the description of this application, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing this application and simplifying the description, rather than indicating or implying that the apparatus or element should have a particular orientation or be constructed and operated in a particular orientation, and therefore, should not be construed as a limitation on this application. In addition, the terms "first" and "second" are used merely for the purpose of description, and shall not be construed as indicating or implying relative importance or implying a quantity of indicated technical features. Therefore, features defining "first" and "second" can explicitly or implicitly include at least one of the features. In the description of this application, "a plurality of" means at least two, such as two and three unless it is specifically defined otherwise. In this application, unless explicitly specified or limited otherwise, the terms "mounted", "connected", "connection", and "fixed" should be understood broadly, for example, which may be fixed connections, detachable connections or integral connections; or the connection may be a mechanical connection or an electrical connection or may communicate with each other; or the connection may be a direct connection, an indirect connection through an intermediary, or internal communication between two elements or mutual action relationship between two elements, unless otherwise specified explicitly. A person of ordinary skill in the art may understand the specific meanings of the foregoing terms in this application according to specific situations. In this application, unless explicitly specified or limited otherwise, a first characteristic "on" or "under" a second characteristic may be the first characteristic in direct contact with the second characteristic, or the first characteristic in indirect contact with the second characteristic by using an intermediate medium. Moreover, the first feature "over", "above" and "up" the second feature may be that the first feature is directly above or obliquely above the second feature, or simply indicates that a horizontal height of the first feature is higher than that of the second feature. The first feature "under", "below" and "down" the second feature may be that the first feature is directly below or obliquely below the second feature, or simply indicates that a horizontal height of the first feature is less than that of the second feature. In this application, a term such as "an embodiment", "some embodiments", "an example", "a specific example", or "some examples" means that a specific feature, structure, material, or characteristic that is described with reference to the embodiment or the example is included in at least one embodiment or example of this application. In the present specification, schematic representations of the above terms are not necessarily directed to the same embodiments or examples. Moreover, the specific features, structures, materials, or characteristics described may be combined in any one or more embodiments or examples in a suitable manner. In addition, different embodiments or examples described in this specification, as well as features of different embodiments or examples, may be integrated and combined by a person skilled in the art without contradicting each other. Although the foregoing embodiments have been shown and described, it can be understood that, the foregoing embodiments are exemplary and should not be understood as limitation to this application. Changes, modifications, replacements, or variations made by a person of ordinary skill in the art can to the foregoing embodiments all fall within the protection scope of this application.

## Claims

1. A box retrieval device, comprising:
a mounting frame defining an accommodating space; and
a box retrieval assembly movably arranged on the mounting base along a front-rear direction, and the box retrieval assembly being at least partially dockable with one end of a cargo box adjacent to the box retrieval assembly in the front-rear direction, to enable the box retrieval assembly to pull or push the cargo box into or out of the accommodating space while the box retrieval assembly moves along the front-rear direction.

2. The box retrieval device according to claim 1, wherein the box retrieval assembly comprises a hook plate portion, and the hook plate portion is configured to hook into or detach from a hook groove in an end face of the one end of the cargo box.

3. The box retrieval device according to claim 1 or 2, wherein the box retrieval assembly comprises two fork arm units arranged opposite to each other and spaced part along a first direction, the first direction is orthogonal to an up-down direction and the front-rear direction, the two fork arm units are configured to respectively extend into two opposites sides of the one end of the cargo box to shift or clamp the cargo box, and a distance between the two fork arm units is adjustable.

4. The box retrieval device according to claim 3, wherein the fork arm unit comprises an arm plate and a hook member arranged at a front end of the arm plate, the hook member is capable of protruding from a side of the arm plate toward the other fork arm unit, to hook a groove wall of a groove or a vertical protruding rib on a side surface of the one end of the cargo box, and the hook member is rotatably connected to the arm plate; and the fork arm unit comprises a rotation driving member, the rotation driving member is mounted on the arm plate, and the rotation driving member is configured to drive the hook member to rotate relative to the arm plate, to enable the hook member to selectively protrude from a surface of the arm plate toward the other fork arm unit.

5. The box retrieval device according to claim 3, wherein the fork arm unit comprises an arm plate and a limiting plate that are vertically connected, the arm plates of the two fork arm units are arranged opposite to each other and spaced apart, the arm plate is configured to clamp or shift the cargo box, the limiting plate is located at a side of the arm plate facing toward the other fork arm unit, the limiting plate is connected to a rear end of the arm plate, and the limiting plate is configured to push the cargo box to move.

6. The box retrieval device according to claim 3, wherein the pick-and-place assembly further comprises:
a fixing frame slidably arranged on the mounting frame along the first direction; and
an adjustment assembly arranged on the fixing frame, wherein the adjustment assembly is configured to drive at least one of the fork arm units to move along the first direction, to adjust the distance between the two fork arm units.

7. The box retrieval device according to claim 6, wherein the adjustment assembly is connected to the two fork arm units, and the adjustment assembly is configured to synchronously drive the two fork arm units to move toward each other or away from each other.

8. The box retrieval device according to claim 1, wherein the box retrieval assembly comprises:
a push plate assembly movable along the front-rear direction; and
a hooking assembly arranged on the push plate assembly and comprises a claw, the hooking assembly being rotatable forward and backward relative to the push plate assembly,
wherein the box retrieval assembly has a first position where a front end of the claw extends forward from the push plate assembly, and a second position where the hooking assembly rotates backward by a first preset angle relative to the push plate assembly, the push plate assembly is adapted to come into contact with the one end of the cargo box, and the claw is adapted to fit with the one end of the cargo box.

9. The box retrieval device according to claim 8, wherein the hooking assembly further comprises a bracket, the bracket is rotatably connected to the push plate assembly, the claw is arranged at a front end of the bracket, and the claw extends forward from the bracket.

10. The box retrieval device according to claim 9, wherein the hooking assembly further comprises a first signal plate and a first sensor, the first sensor is arranged in the bracket, the first signal plate is arranged on the bracket and is movable in an up-down direction relative to the bracket, in the first position, a first end of the first signal plate extends from the claw, and in the second position, a second end of the first signal plate is capable of triggering the first sensor.

11. The box retrieval device according to claim 9, further comprising a first return member, wherein the first return member is connected to the push plate assembly and the bracket, and the first return member has an acting force to cause the bracket to return to the first position.

12. The box retrieval device according to any one of claims 8 to 11, wherein the push plate assembly comprises a base and a push plate, the push plate is located at a front side of the base, and the push plate is movable in the front-rear direction relative to the base; and
the box retrieval assembly further has a third position located between the first position and second position, in the third position, the hooking assembly rotates backward by a second preset angle relative to the support assembly, the second preset angle is less than the first preset angle, and the push plate and the base are spaced apart in the front-rear direction; and in the second position, the push plate abuts against the base.

13. The box retrieval device according to claim 12, wherein the push plate assembly further comprises a guide member, a front end of the guide member is connected to the push plate, and the guide member at least partially extends into the base and is movable in the front-rear direction relative to the base.

14. The box retrieval device according to claim 13, wherein the push plate assembly further comprises an elastic member, the elastic member is located in the base, the elastic member has a first end abutting against the guide member and a second end abutting against the base, and the elastic member has an elastic force to cause the guide member to move forward.

15. The box retrieval device according to claim 14, wherein the guide member comprises an annular protrusion, the annular protrusion is located in the base, and the first end of the elastic member abuts against the annular protrusion.

16. The box retrieval device according to claim 12, wherein the push plate assembly further comprises a second signal plate and a second sensor, the second sensor is located in the base, a front end of the second signal plate is connected to the push plate, and in the second position, the second signal plate is at least partially located in the base and is capable of triggering the second sensor.

17. The box retrieval device according to claim 12, wherein in a projection plane formed in the front-rear direction and the up-down direction, a projection of a front end face of the push plate is a forward convex arc.

18. The box retrieval device according to claim 12, wherein at least two push plate assemblies are provided, the at least two push plate assemblies are spaced apart in the first direction, the first direction is orthogonal to the front-rear direction and the up-down direction, and the hooking assembly is located between the adjacent push plate assemblies.

19. The box retrieval device according to any one of claims 1 to 18, further comprising a box retrieval drive assembly, wherein the box retrieval drive assembly is arranged on the mounting frame, and the box retrieval drive assembly is connected to the box retrieval assembly to drive the box retrieval assembly to move along the front-rear direction.

20. The box retrieval device according to claim 19, wherein the box retrieval drive assembly comprises:
a box retrieval motor mounted on the mounting frame; and
a box retrieval transmission assembly, wherein two box retrieval transmission assemblies are spaced apart along the first direction, the box retrieval assembly is connected between the two box retrieval transmission assemblies, the accommodating space is defined between the two box retrieval transmission assemblies, and the box retrieval motor drives the box retrieval assembly through the box retrieval transmission assemblies to move along the front-rear direction.

21. A robot, comprising:
a chassis; a gantry arranged on the chassis;
a lifting assembly configured to move along the gantry in an up-down direction; and
a box retrieval device, wherein the lifting assembly is connected to the box retrieval device to drive the box retrieval device to move in the up-down direction relative to the gantry, and the box retrieval device is the box retrieval device according to any one of claims 1 to 20.

22. The robot according to claim 21, further comprising:
at least two auxiliary support devices, wherein the at least two auxiliary support devices are controlled by respective drive assemblies, and are respectively arranged on two opposite sides of the robot, and the at least two auxiliary support devices are configured to extend, relative to the robot, to abut against or separate from racks on two sides of the robot.

23. The robot according to claim 22, wherein the auxiliary support device comprises a fixed base and a support element telescopically connected to the fixed base by a telescopic mechanism; and the telescopic mechanism is controlled by the drive assembly and configured to drive the support element to move relative to the fixed base to abut against or separate from the rack on a corresponding side.

24. The robot according to any one of claims 21 to 23, further comprising a telescopic fork device, wherein the lifting assembly is connected to the telescopic fork device to drive the telescopic fork device to move in the up-down direction relative to the gantry, the box retrieval device is arranged on the telescopic fork device, and the telescopic fork device comprises a movable pallet connected to the lifting assembly; and multi-stage telescopic mechanisms are arranged opposite to each other on two sides of the movable pallet, a rear shifting finger configured to limit the cargo box being arranged on each multi-stage telescopic mechanism; and
the telescopic fork device further comprises: an in-place detection device configured to detect a position of the rear shifting finger, and a control device configured to control the chassis and the lifting assembly to be locked when the in-place detection device detects that the position of the rear shifting finger exceeds a set position.

25. The robot according to claim 24, wherein the control device is further configured to control the chassis and the lifting assembly to release a locked state when the in-place detection device detects that the rear shifting finger does not exceed the set position.
